# EUROPÄISCHE PATENTSCHRIFT

(11) **EP 1 477 715 B1**
(45) Veröffentlichungstag und Bekanntmachung des Hinweises auf die Patenterteilung: **24.11.2004**
(21) Anmeldenummer: 03010654.6
(22) Anmeldetag: 13.05.2003
(51) Int. Cl.: F16K 31/06

(54) **Klappankerventil**
Pivot armature valve
Soupape à armature pivotante

(43) Veröffentlichungstag der Anmeldung: 17.11.2004
(73) Patentinhaber: FESTO AG & Co, 73734 Esslingen (DE)
(72) Erfinder: Kees, Ulrich, 66424 Homburg (DE)
(74) Vertreter: Abel, Martin

(56) Entgegenhaltungen:
- DE-A- 3 346 290
- DE-A- 19 505 233
- US-A- 4 574 841
- US-A- 5 709 370

## Beschreibung

Die Erfindung betrifft ein Klappankerventil, mit einem Antriebsteil, das ein Antriebsteil-Gehäuse aufweist, in dem eine Elektromagneteinheit mit Eisenkern und Spule angeordnet ist, mit einem an dem Antriebsteil befestigten Steuerteil, das ein Steuerteil-Gehäuse aufweist, in dem eine durch das angesetzte Antriebsteil abgedeckte Steuerkammer ausgebildet ist, in der sich ein schwenkbeweglich gelagerter Klappanker befindet, der abwechselnd eine am Antriebsteil ausgebildete und von einem ersten Ventilsitz umschlossene erste Ventilöffnung und eine am Steuerteil-Gehäuse ausgebildete und von einem zweiten Ventilsitz umschlossene zweite Ventilöffnung freigeben oder verschließen kann, und mit einer die erste Ventilöffnung umgebenden Aufnahmevertiefung im Antriebsteil, die eine den Klappanker in eine die zweite Ventilöffnung verschließende Grundstellung vorspannende Rückstellfeder enthält.

Bei einem aus der DE 3346290 C2 bekannte Klappankerventil dieser Art ist eine Elektromagneteinheit stirnseitig in ein Antriebsteil-Gehäuse eingesetzt, wobei sie mit einem Flansch ihres Spulenkörpers an der Außenfläche des Antriebsteil-Gehäuses anliegt. An den Flansch des Spulenkörpers ist ein eine Steuerkammer definierendes Steuerteil angesetzt, in dessen Steuerteil-Gehäuse ein schwenkbeweglicher Klappanker untergebracht ist. Der Klappanker kann abwechselnd zwei Ventilöffnungen freigeben oder verschließen, deren eine am Flansch des Spulenkörpers und deren andere am Steuerteil-Gehäuse ausgebildet ist. Eine in einer Vertiefung des Spulenkörpers sitzende Rückstellfeder beaufschlagt den Klappanker in Richtung einer die am Steuerteil-Gehäuse vorgesehene zweite Ventilöffnung verschließenden Grundstellung. An die dem Antriebsteil entgegengesetzte Seite des Steuerteil-Gehäuses ist eine Anschlussplatte angesetzt, die über mit den Ventilöffnungen kommunizierende Anschlussplattenkanäle verfügt und die gleichzeitig als Deckel zum Verschließen der Steuerkammer fungiert.

Das bekannte Klappankerventil setzt sich aus einer Vielzahl von Bauteilen zusammen und erfordert eine aufwendige Herstellung, was relativ hohe Kosten nach sich zieht.

Die DE 19505233 C2 beschreibt ein Klappankerventil, das über ein zweiteiliges Gehäuse verfügt. Die beiden Teile des Gehäuses definieren eine Fluidkammer, in der ein schwenkbeweglicher Klappanker angeordnet ist. Ein aus einem Eisenkern und einer Spule bestehender Elektromagnet ist in einem der beiden Gehäuseteile befestigt. Durch eine in einer Aufnahmevertiefung des einen Gehäuseteils aufgenommene Rückstellfeder wird der Klappanker in eine Grundstellung vorgespannt. Die vom Klappanker abwechselnd freigebbaren und verschließbaren Ventilöffnungen sind hinsichtlich ihrer Position einstellbar, um eine Ausrichtung in Bezug auf die Polflächen des Eisenkerns vornehmen zu können. Auf diese Weise lässt sich ein kleiner Luftspalt realisieren, der ein Kleben des Klappankers am Eisenkern vermeidet.

Es ist die Aufgabe der vorliegenden Erfindung, ein Klappankerventil der eingangs genannten Art zu schaffen, das sich bei teilearmem Aufbau einfach und kostengünstig fertigen lässt.

Zur Lösung dieser Aufgabe ist vorgesehen, dass die Elektromagneteinheit komplett im Antriebsteil-Gehäuse aufgenommen ist, wobei das Antriebsteil-Gehäuse als durch Spritzgießen an die Elektromagneteinheit angeformtes Kunststoffteil ausgeführt ist, dass die Aufnahmevertiefung und der erste Ventilsitz beim Spritzgießen des Antriebsteil-Gehäuses erzeugte unmittelbare Bestandteile des Antriebsteil-Gehäuses sind, dass das ebenfalls als Kunststoffteil ausgeführte Steuerteil-Gehäuse zusammen mit dem Antriebsteil die Steuerkammer definiert und im Bereich der Steuerkammer so geformt ist, dass es eine Lagesicherung des Klappankers in dessen Längsrichtung und Querrichtung bewirkt, und dass die beiden Gehäuse direkt aneinander anliegen und im Fügebereich durch eine umlaufende Laserschweißverbindung stoffschlüssig und gasdicht aneinander befestigt sind.

Zur Herstellung des Antriebsteils wird somit die Elektromagneteinheit mit Kunststoffmaterial umspritzt, wobei gleichzeitig der erforderliche Ventilsitz mit zugehörigem Ventilkanal und die zur Aufnahme der Rückstellfeder dienende Aufnahmevertiefung geformt werden. Somit erübrigt sich eine nachträgliche gesonderte Montage der Elektromagneteinheit im Antriebsteil-Gehäuse, und auch auf eine spanende Bearbeitung des Kunststoffteils zur Realisierung des ersten Ventilsitzes und der Aufnahmevertiefung kann verzichtet werden. Zur Bildung der Steuerkammer wird das ebenfalls aus Kunststoffmaterial bestehende Steuerteil-Gehäuse an das Antriebsteil-Gehäuse angesetzt, wobei der Klappanker durch eine entsprechende Ausgestaltung des Steuerteil-Gehäuses sowohl in seiner Längsrichtung als auch in Querrichtung lagegesichert ist. Eine gesonderte Fixierung des Klappankers erübrigt sich damit. Indem schließlich die gasdichte Verbindung zwischen dem Antriebsteil-Gehäuse und dem Steuerteil-Gehäuse durch eine umlaufende Laserschweißverbindung im Fügebereich der beiden Gehäuse realisiert wird, kann auf gesonderte Abdichtmaßnahmen und den umständlichen und kostenaufwendigen Einsatz gesonderter Befestigungsmittel verzichtet werden. Insgesamt kann das Klappankerventil mit relativ geringen Kosten hergestellt werden.

Vorteilhafte Weiterbildungen der Erfindung gehen aus den Unteransprüchen hervor.

Um ein Ankleben des Klappankers an den ihm zugewandten Polflächen des Eisenkerns zu verhindern, ist die Elektromagneteinheit an der dem Klappanker zugewandten Seite zweckmäßigerweise von einer filmartig dünnen Kunststoffschicht des Antriebsteil-Gehäuses überdeckt, die unmittelbar bei der Spritzgießherstellung des Antriebsteil-Gehäuses hergestellt wird.

Der Eisenkern ist zweckmäßigerweise E-förmig gestaltet und besteht vorzugsweise aus einem Paket seitlich aneinandergesetzter Polbleche. Durch eine solche Paketierung ergibt sich eine besonders gute Energiedichte mit entsprechend kurzen Schaltzeiten.

Zur Schwenklagerung des Klappankers kann ein am Steuerteil-Gehäuse angeformter Lagerungsvorsprung vorgesehen sein, der von der dem Antriebsteil entgegengesetzten Seite her in die Steuerkammer hineinragt und mit einem schneidenartigen Endabschnitt in eine Querrille des sich auf der entgegengesetzten Seite am Antriebsteil-Gehäuse abstützenden Klappankers eingreift.

Zum Öffnen und Schließen der beiden jeweils von einem Ventilsitz umgebenen Ventilöffnungen ist am Klappanker bevorzugt ein einziges Verschlussglied vorgesehen, das in eine Durchbrechung des länglichen, ferromagnetischen Grundkörpers des Klappankers von der Seite her lose eingesteckt ist. Wenn das Verschlussglied begrenzt allseitig kippbar in der Durchbrechung sitzt, können sich ihre den Ventilsitzen zugewandten Schließflächen beim Kontakt mit den Ventilsitzen selbsttätig ausrichten, sodass eine zuverlässig dichtende, plane Dichtauflage erzielt wird.

Zur Realisierung eines Klappankerventils mit 3/2-Ventilfunktionalität mündet zusätzlich zu den zur ersten und zweiten Ventilöffnung führenden Ventilkanälen ein nicht gesteuerter, dritter Ventilkanal in die Steuerkammer ein. Sämtliche drei Ventilkanäle durchsetzen das Antriebsteil-Gehäuse und münden zur Außenfläche des Antriebsteil-Gehäuses aus, und zwar zweckmäßigerweise an der dem Steuerteil entgegengesetzten Grundfläche des Antriebsteil-Gehäuses, wo eine Anschlussplatte ansetzbar ist, die über mit den Ventilkanälen kommunizierende Anschlussplattenkanäle verfügt.

Das Klappankerventil kann mit Handbetätigungsmitteln ausgestattet sein, die eine manuelle Betätigung ohne Aktivierung der Elektromagneteinheit ermöglichen. Diese Handbetätigungsmittel verfügen über einen Betätigungsstößel, der das Steuerteil-Gehäuse in dem die Steuerkammer auf der dem Ansteuerteil entgegengesetzten Seite begrenzenden Wandabschnitt, in Hubrichtung des Klappankers verstellbar, durchsetzt. Bei manueller Betätigung des Betätigungsstößels lässt sich auf den Klappanker eine Stellkraft ausüben, die diesen aus der Grundstellung auslenkt.

Nachfolgend wird die Erfindung anhand der beiliegenden Zeichnung näher erläutert. In dieser zeigen:
- Fig. 1: eine bevorzugte Bauform des erfindungsgemäßen Klappankerventils in einem Längsschnitt gemäß Schnittlinie I-I aus Fig. 2,
- Fig. 2: das Klappankerventil aus Fig. 1 in einer Draufsicht mit Blickrichtung gemäß Pfeil II,
- Fig. 3: eine Stirnansicht des Klappankerventils mit Blickrichtung gemäß Pfeil III aus Fig. 1,
- Fig. 4: eine Einzeldarstellung einer mit Handbetätigungsmitteln versehenen möglichen Ausführungsvariante des Steuerteils in einer Draufsicht mit Blickrichtung gemäß Pfeil IV aus Fig. 5,
- Fig. 5: einen Längsschnitt durch das Steuerteil gemäß Schnittlinie V-V aus Fig. 4,
- Fig. 6: die Einzeldarstellung einer weiteren, mit Handbetätigungsmitteln ausgestatteten Ausführungsvariante des Steuerteils in Draufsicht mit Blickrichtung gemäß Pfeil VI aus Fig. 7,
- Fig. 7: das Steuerteil aus Fig. 6 im Längsschnitt gemäß Schnittlinie VII-VII und
- Fig. 8: das Steuerteil der Fig. 6 und 7 im Querschnitt gemäß Schnittlinie VIII-VIII aus Fig. 6.

Das in seiner Gesamtheit mit Bezugsziffer 1 bezeichnete Klappankerventil verfügt über ein Antriebsteil 2 und ein an der Oberseite 3 des Antriebsteils 2 angesetztes Steuerteil 4. Mit der der Oberseite 3 entgegengesetzten Unterseite 5 ist das Antriebsteil 2 an eine Anschlussplatte 6 angesetzt. Die Angaben "Oberseite" und "Unterseite" beziehen sich auf die beispielhafte, bevorzugte Ausrichtung des Klappankerventils 1, wobei jedoch festzuhalten ist, dass die spätere Ausrichtung des Klappankerventils 1 im Betrieb beliebig ist.

Das Antriebsteil 2 verfügt über ein aus Kunststoffmaterial bestehendes Antriebsteil-Gehäuse 7, in dem sich eine Elektromagneteinheit 8 befindet. Letztere ist komplett im Antriebsteil-Gehäuse aufgenommen.

Die Elektromagneteinheit 8 verfügt über einen Eisenkern 11, der bevorzugt E-förmig gestaltet ist. Die Polflächen 12 des Eisenkerns 11 befinden sich im Bereich der Oberseite 3 und sind dem Steuerteil 4 zugewandt. Beim Ausführungsbeispiel sind drei Polflächen 12 vorgesehen, die von den Stirnflächen der drei in der Höhenrichtung 13 des Klappankerventils 1 ausgerichteten Schenkel 14 des E-förmigen Eisenkerns 11 gebildet sind. Die Schenkel 14 und mithin auch die Polflächen 12 sind in der Längsrichtung 15 des Klappankerventils 1 in Reihe aufeinanderfolgend angeordnet.

Die Elektromagneteinheit 8 enthält eine auf dem mittleren Schenkel 14 des Eisenkerns 11 sitzende Spule 17. Sie steht mit elektrischen Anschlusskontakten 16 in Verbindung, die das Antriebsteil-Gehäuse 7 durchsetzen und aus diesem, zum Ermöglichen des elektrischen Anschlusses, herausragen. Axial beidseits ist die Spule 17 zweckmäßigerweise von einem ebenfalls auf dem mittleren Schenkel 14 sitzenden Kunststoffplättchen 19 flankiert.

Das Antriebsteil-Gehäuse ist ein Kunststoffteil, das bei seiner Herstellung unmittelbar durch Spritzgießen an die Elektromagneteinheit 8 angeformt wurde. Die Elektromagneteinheit 8 ist somit ringsum formschlüssig in das Antriebsteil-Gehäuse 7 eingebettet, wobei sämtliche Zwischenräume vom Kunststoffmaterial des Antriebsteil-Gehäuses 7 ausgefüllt sind. Insbesondere erstreckt sich das Kunststoffmaterial des Antriebsteil-Gehäuses 7 auch in die Zwischenräume zwischen der Spule 17 und dem Eisenkern 11. Bevorzugt besteht das Antriebsteil-Gehäuse 7 aus einem thermoplastischen Kunststoffmaterial.

Beim Umspritzen der Elektromagneteinheit 8 werden gleichzeitig auch die elektrischen Anschlusskontakte 16 in das Material des Antriebsteil-Gehäuses 7 eingebettet.

Das Steuerteil 4 verfügt über ein ebenfalls aus Kunststoffmaterial, bevorzugt ein thermoplastisches Kunststoffmaterial, bestehendes Steuerteil-Gehäuse 18. Es ist gesondert vom Antriebsteil-Gehäuse 7 gefertigt und wird bei der Montage des Klappankerventils 1 an der Oberseite 3 an das Antriebsteil-Gehäuse 7 angesetzt.

Im Innern des Steuerteil-Gehäuses 18 ist eine als Steuerkammer 21 bezeichnete Kammer ausgebildet. Diese ist zum Antriebsteil 2 hin offen und im Übrigen durch das Steuerteil-Gehäuse 18 komplett abgeschlossen. Somit wird die Steuerkammer 21 im an das Antriebsteil 2 angesetzten Zustand des Steuerteils 4 gemeinsam vom Antriebsteil 2 und vom Steuerteil-Gehäuse 18 definiert.

Die Steuerkammer 21 hat längliche Gestalt und erstreckt sich in der Längsrichtung 15 des Klappankerventils 1.

In die Steuerkammer 21 münden an einem.ihrer Endbereiche seitlich eine erste Ventilöffnung 22 und eine zweite Ventilöffnung 23. Diese beiden Ventilöffnungen 22, 23 liegen sich in der Höhenrichtung 13 des Klappankerventils 1 gegenüber, wobei sie einander zugewandt sind.

Die erste Ventilöffnung 22 ist am Antriebsteil-Gehäuse 7 ausgebildet und von einem ersten Ventilsitz 24 umschlossen, der vom Kunststoffmaterial des Antriebsteil-Gehäuses 7 definiert wird. Die zweite Ventilöffnung 23 befindet sich am Steuerteil-Gehäuse 18 und ist von einem zweiten Ventilsitz 25 umschlossen, der vom Kunststoffmaterial des Steuerteil-Gehäuses 18 definiert wird.

Eine nicht von einem Ventilsitz umgebene dritte Ventilöffnung 26 mündet ebenfalls in die Steuerkammer 21 ein und ist so an der Oberseite des Steuerteil-Gehäuses 18 angeordnet, dass sie von der im Steuerteil 4 ausgebildeten Steuerkammer 21 überdeckt wird.

Die ersten, zweiten und dritten Ventilöffnungen 22, 24, 26 sind die Mündungen eines ersten, zweiten bzw. dritten Ventilkanals 27, 28, 29. Diese drei Ventilkanäle 27, 28, 29 durchsetzen jeweils, zumindest mit einem Teil ihrer Kanallänge, das Antriebsteil-Gehäuse 7 und münden mit einer ersten, zweiten bzw. dritten Anschlussöffnung 31, 32, 33 an der Außenfläche des Antriebsteil-Gehäuses 7 aus. Beim Ausführungsbeispiel liegen die drei Anschlussöffnungen 31, 32, 33 gemeinsam an der an der Unterseite 5 befindlichen Grundfläche 34 des Antriebsteil-Gehäuses 7.

Während die von der ersten und dritten Ventilöffnung 22, 26 ausgehenden ersten und dritten Ventilkanäle 27, 29 über ihre gesamte Länge im Antriebsteil-Gehäuse 7 verlaufen, ist der zwischen der zweiten Ventilöffnung 23 und der zweiten Anschlussöffnung 32 verlaufende zweite Ventilkanal 28 längenmäßig in einen ersten und einen zweiten Kanalabschnitt 35, 36 unterteilt, wobei der erste Kanalabschnitt 35 im Steuerteil-Gehäuse 18 und der zweite Kanalabschnitt 36 im Antriebsteil-Gehäuse 7 verläuft. Diese beiden Kanalabschnitte 35, 36 münden mit einander zugewandten Kanalmündungen 37 zum Fügebereich 38 der beiden Gehäuse 7, 18 aus und stehen dadurch miteinander in fluidischer Verbindung.

Da der erste Kanalabschnitt 35 des zweiten Ventilkanals 28 ein Stück weit um die Steuerkammer 21 herumläuft, wird er zweckmäßigerweise unter anderem durch zwei zueinander rechtwinkelig verlaufende Kanaläste realisiert, von denen einer durch ein Verschlussglied 74 dicht verschlossen wird. Das Verschlussglied 74 ist beispielsweise eine eingepresste Kugel oder ein eingeschweißter Stopfen.

Sämtliche im Antriebsteil-Gehäuse 7 verlaufenden Kanalbereiche - vorliegend sind dies die vollständigen ersten und zweiten Ventilkanäle 27, 29 sowie der zweite Kanalabschnitt 36 des zweiten Ventilkanals 28 - sind unmittelbar bei der Spritzgieß-Herstellung des Antriebsteil-Gehäuses 7 erzeugt worden, also beim Umspritzen der Elektromagneteinheit 8 mit dem das Antriebsteil-Gehäuse 7 bildenden Kunststoffmaterial. Auf diese Weise kann auf eine nachträgliche spanende Bearbeitung des Antriebsteil-Gehäuses 7 verzichtet werden.

An die Grundfläche 34 des Antriebsteil-Gehäuses 7 ist, unter Zwischenschaltung einer Dichtung 39, die Anschlussplatte 6 angesetzt. In dieser verlaufen erste, zweite und dritte Anschlussplattenkanäle 42, 43, 44, die einenends zu der das Antriebsteil 2 tragenden Bestückungsfläche 45 der Anschlussplatte 6 ausmünden und dort unter Abdichtung zuordnungsrichtig mit den ersten, zweiten und dritten Anschlussöffnungen 31, 32, 33 kommunizieren. Andernends führen die Anschlussplattenkanäle 42, 43, 44 zur Außenfläche der Anschlussplatte 6, wo sie bei Bedarf mit Anschlussmitteln 46 ausgestattet sein können, die das lösbare Anschließen wegführender Fluidleitungen ermöglichen.

Bei dem Klappankerventil 1 des Ausführungsbeispiels bildet der erste Ventilkanal 27 einen Entlüftungskanal, der über den zugeordneten ersten Anschlussplattenkanal 42 zur Atmosphäre ausmündet. Er ist daher nicht mit Anschlussmitteln 46 bestückt. Bei Bedarf kann jedoch ein nicht näher dargestellter Schalldämpfer angeschlossen werden. Ferner können selbstverständlich entsprechende Anschlussmittel 46 vorgesehen werden, wenn eine gefasste Abfuhr der Abluft gewünscht ist.

Der zweite Ventilkanal 28 ist beim Ausführungsbeispiel ein Speisekanal. Über ihn wird im Betrieb Druckluft eingespeist.

Der dritte Ventilkanal 29 schließlich ist beim Ausführungsbeispiel ein Arbeitskanal, an den ein zu betätigender Verbraucher, beispielsweise ein pneumatisch betätigbarer Antrieb, angeschlossen werden kann.

Wenngleich sich das Klappankerventil 1 vor allem zur Steuerung von Druckluft eignet, kann es ohne weiteres auch zur Steuerung anderer gasförmiger Medien oder auch zur Steuerung hydraulischer Druckmedien eingesetzt werden.

In der Steuerkammer 21 sitzt ein länglicher, insbesondere balkenähnlich gestalteter Klappanker 47. Er verfügt über einen länglichen, ferromagnetische Eigenschaften aufweisenden Grundkörper 48, der an seinem vorderen Endbereich mit einem Verschlussglied 51 bestückt ist. Das Verschlussglied 51 sitzt zwischen dem ersten und zweiten Ventilsitz 24, 25, wobei seine Länge geringer ist als der Abstand zwischen diesen beiden Ventilsitzen 24, 25.

Im Bereich seiner Rückseite ist der Klappanker 47 schwenkbeweglich gelagert, wobei die Schwenkachse in der Breitenrichtung, rechtwinkelig zur Längsrichtung 15 und zur Höhenrichtung 13, verläuft. Die auf diese Weise mögliche Schwenkbewegung des Klappankers 47 ist bei 52 durch einen Doppelpfeil markiert.

Der ferromagnetische Grundkörper 48 erstreckt sich über die Polflächen 12 der Elektromagneteinheit 8 hinweg. Allerdings steht er zu keiner Zeit in unmittelbarem Kontakt mit dem Eisenkern 11, weil die Elektromagneteinheit 8 an der dem Klappanker 47 zugewandten Seite zweckmäßigerweise von einer filmartig dünnen Kunststoffschicht 53 überdeckt ist. Diese Kunststoffschicht 53 ist integraler Bestandteil des Antriebsteil-Gehäuses 7 und wird bei der Spritzgieß-Formgebung des Antriebsteil-Gehäuses 7 erzeugt. Sie hat letztlich auch den Effekt, dass die Elektromagneteinheit 8 im Kunststoffmaterial des Antriebsteil-Gehäuses 7 dicht gekapselt eingebettet ist.

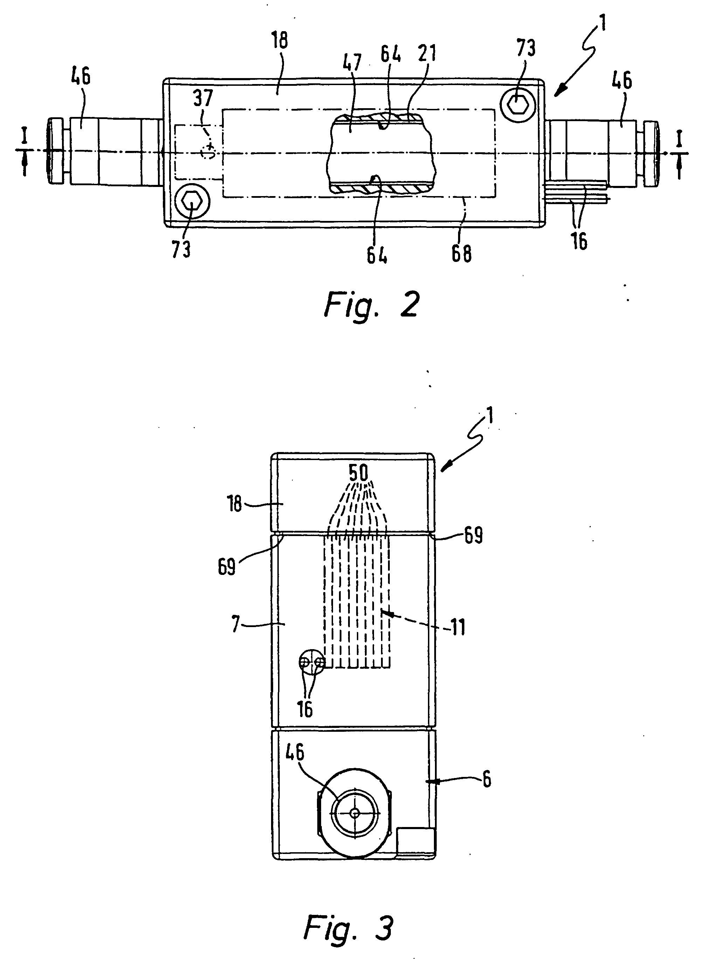

Wie sich aus Fig. 3 ergibt, besteht der Eisenkern 11 zweckmäßigerweise aus einem Paket seitlich aneinandergesetzter Polbleche 50. Daraus resultiert eine besonders hohe Energiedichte bei kompakten Abmessungen.

Um die Schwenklagerung des Klappankers 47 zu realisieren, ist beim Ausführungsbeispiel ein mit dem Steuerteil-Gehäuse 18 einstückiger Lagerungsvorsprung 54 vorgesehen, der von der dem Antriebsteil 2 entgegengesetzten Seite her in die Steuerkammer 21 hineinragt und mit einem schneidenartigen Endabschnitt 55 in eine zum Beispiel durch Einprägen erzeugte Querrille 56 des Grundkörpers 48 eingreift, wobei sich der Klappanker 47 auf der entgegengesetzten Seite am Antriebsteil-Gehäuse 7 abstützen kann. Das in Höhenrichtung 13 gemessene Spiel zwischen dem Antriebsteil-Gehäuse 7 und dem schneidenartigen Endabschnitt 55 ist so bemessen, dass der Klappanker 47 den erforderlichen Schwenkfreiheitsgrad aufweist.

Das Verschlussglied 51 ist von der dem Antriebsteil 2 zugewandten Seite her in eine den Grundkörper 48 in Höhenrichtung durchsetzende Durchbrechung 57 lose eingesteckt. Die Einstecktiefe wird begrenzt durch ein fest mit dem Verschlussglied 51 verbundenes, beispielsweise aufgepresstes oder einstückig angeformtes, bevorzugt ringförmiges Anschlagelement 58.

Das Verschlussglied 51 besteht zweckmäßigerweise aus Material mit gummielastischen Eigenschaften. Es verfügt über zwei einander entgegengesetzte, jeweils einem der beiden Ventilsitze 24, 25 zugewandte Schließflächen 59, 60.

Die erste Ventilöffnung 22 und der sich an diese anschließende Längenabschnitt des ersten Ventilkanals 27 sind von einer ringförmigen Aufnahmevertiefung 62 umgeben, die zusammen mit dem ersten Ventilsitz 24 unmittelbar beim Spritzgießen des Antriebsteil-Gehäuses 7 erzeugt wurde.

In der Aufnahmevertiefung 62 sitzt eine beim Ausführungsbeispiel als Schraubendruckfeder ausgebildete Rückstellfeder 63, die sich zwischen dem Grund der Aufnahmevertiefung 62 und dem Klappanker 47 abstützt. Sie ist so ausgelegt, dass sie den Klappanker 47 im nicht erregten Zustand der Elektromagneteinheit 8 in eine Grundstellung vorspannt, in der der Klappanker 47 mit seinem Verschlussglied 51 am zweiten Ventilsitz 25 anliegt und somit die zweite Ventilöffnung 23 dicht verschließt.

In diesem Zusammenhang ist es vorteilhaft, wenn die Rückstellfeder 63 seitens des Klappankers 47 auf das Verschlussglied 51 einwirkt, wobei sie sich beim Ausführungsbeispiel an dem das Anschlagelement 58 bildenden radialen Vorsprung abstützt.

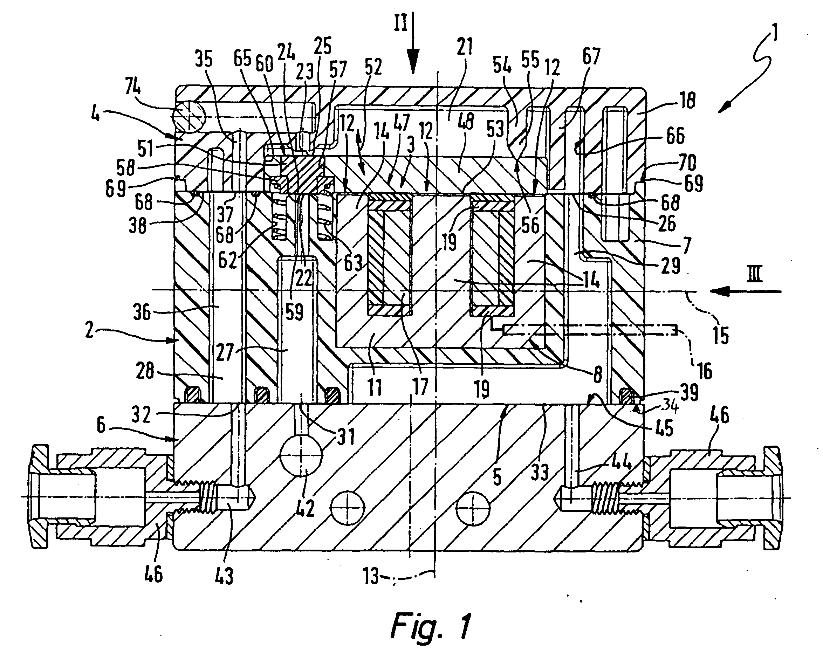

Wird die Elektromagneteinheit 8 durch Anlegen einer Spannung an die Anschlusskontakte 16 betätigt, wird der Klappanker 47 entgegen der Kraft der Rückstellfeder 63 in die aus Fig. 1 ersichtliche ausgelenkte Stellung verschwenkt. In dieser ausgelenkten Stellung wird die in der Grundstellung freigegebene erste Ventilöffnung 22 durch das am ersten Ventilsitz 24 anliegende Verschlussglied 51 verschlossen und gleichzeitig die zweite Ventilöffnung 23 freigegeben, da das Verschlussglied 51 vom zweiten Ventilsitz 25 abgehoben ist.

Nach dem Deaktivieren der Elektromagneteinheit 8 kehrt der Klappanker 47 aufgrund der Federkraft in die Grundstellung zurück.

In Verbindung mit dem ständig mit der Steuerkammer 21 kommunizierenden dritten Ventilkanal 29 lässt sich somit eine 3/2-Ventilfunktion realisieren. Dabei sind in der Grundstellung der erste und der dritte Ventilkanal 27, 29 und in der ausgelenkten Stellung der zweite und der dritte Ventilkanal 28, 29 über die Steuerkammer 21 hinweg miteinander verbunden, während der jeweils verbleibende zweite bzw. erste Ventilkanal 28, 27 abgesperrt ist.

Um von Montagetoleranzen unabhängig zu sein, sitzt das Verschlussglied 51 derart allseitig begrenzt kippbeweglich in der Durchbrechung 57 ein, dass sich ihre Schließflächen 59, 60 bezüglich des jeweils kontaktierten Ventilsitzes 24, 25 selbsttätig ausrichten können. Auf diese Weise wird unter allen Umständen eine plane Dichtauflage mit optimalen Dichteigenschaften erzielt.

Das Steuerteil-Gehäuse 18 ist im Bereich der Steuerkammer 21 so geformt, dass es eine Lagesicherung des Klappankers 47 in sowohl dessen Längsrichtung als auch Querrichtung bewirkt. Beim Ausführungsbeispiel ist der Klappanker 47 seitlich mit geringem, die Schwenkbeweglichkeit gewährleistendem Spiel zwischen den Seitenwänden 64 der Steuerkammer 21 fixiert. In der Längsrichtung erfolgt die Fixierung zwischen der vorderen Stirnwand 65 der Steuerkammer 21 und einer mit Abstand zur rückwärtigen Stirnwand 66 in die Steuerkammer 21 hineinragenden Zwischenwand 67, die ein einstückiger Bestandteil des Steuerteil-Gehäuses 18 ist.

In dem Fügebereich 38 zwischen dem Steuerteil-Gehäuse 18 und dem Antriebsteil-Gehäuse 7 ist eine bevorzugt einstückige Dichtung 68 eingelegt, die zum einen die Steuerkammer 21 und zum anderen den Bereich der miteinander kommunizierenden Kanalmündungen 37 der beiden Kanalabschnitte 35, 36, jeweils gesondert, umschließt. Die Dichtung 68 ist in Fig. 2 strichpunktiert angedeutet.

In dem Fügebereich 38 liegt das Steuerteil-Gehäuse 18 unmittelbar an dem Antriebsteil-Gehäuse 7 an. Zur gegenseitigen Fixierung ist eine umlaufende Laserschweißverbindung 69 vorgesehen, durch die die beiden Gehäuse 7, 18 außen am Fügebereich 38 stoffschlüssig und zugleich gasdicht aneinander befestigt sind.

Bevorzugt sitzt die Schweißnaht der Laserschweißverbindung 69 in einer im Fügebereich 38 um die beiden Gehäuse 7, 18 umlaufenden Fuge 70.

Durch die Laserschweißverbindung stellen das Antriebsteil 2 und das Steuerteil 4 eine unlösbar fest zusammenhängende Baueinheit dar. Zu ihrer gegenseitigen Fixierung sind keine gesonderten Befestigungsmittel erforderlich. Lediglich zur Fixierung der Baueinheit an der Bestückungsfläche 45 der Anschlussplatte 6 sind geeignete Befestigungsmittel 73, beispielsweise Befestigungsschrauben, vorgesehen.

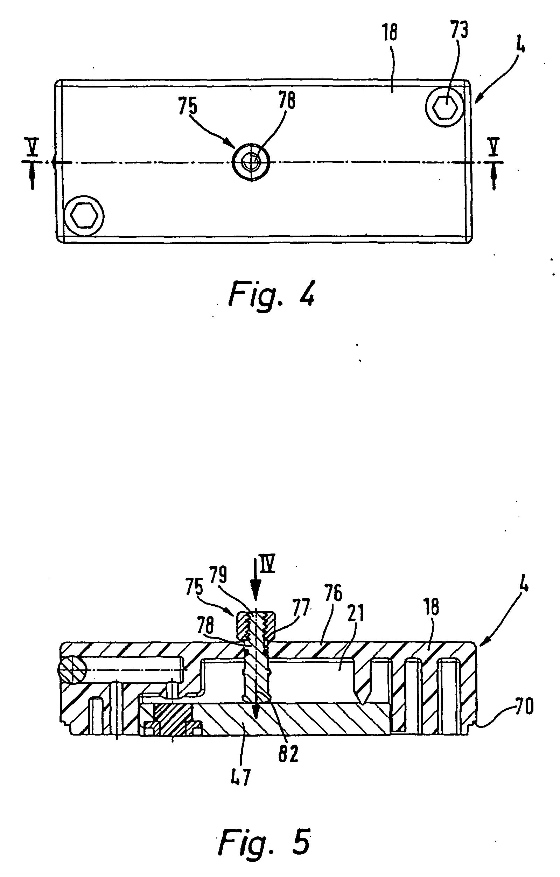

Während die Fig. 1 bis 3 eine Bauform des Klappankerventils 1 zeigen, das ausschließlich zur elektrischen Betätigung ausgelegt ist, verdeutlichen die Fig. 4 bis 8 mögliche Modifikationen, die bei Bedarf auch eine manuelle Hilfsbetätigung zulassen, beispielsweise zu Test- oder Wartungszwecken. In diesem Zusammenhang ist das Klappankerventil 1 mit geeigneten Handbetätigungsmitteln 75 ausgestattet.

Zur Realisierung dieser Handbetätigungsmittel 75 ist das Steuerteil-Gehäuse 18 in dem die Steuerkammer 21 auf der dem Ansteuerteil 2 entgegengesetzten Seite begrenzenden oberen Wandabschnitt 76 mit einer Durchbrechung 77 versehen, durch die ein Betätigungsstößel 78 unter Abdichtung hindurchgreift. Auf einen aus dem Steuerteil-Gehäuse 18 herausragenden Betätigungsabschnitt 79 des Betätigungsstößels 78 kann manuell derart eingewirkt werden, dass sich der Betätigungsstößel 78 gemäß Pfeil 82 in Richtung zum Klappanker 47 verlagert und diesen so beaufschlagt, dass er aus der zuvor eingenommenen Grundstellung in die gezeigte ausgelenkte Stellung verschwenkt wird.

Der Betätigungsstößel 78 kann, wie dies beim Ausführungsbeispiel der Fig. 4 und 5 der Fall ist, ein allein durch axiales Verschieben betätigbares Schiebeteil sein. In diesem Falle genügt es, zur Betätigung eine in Pfeilrichtung 82 orientierte Druckkraft auf den Betätigungsabschnitt 79 auszuüben.

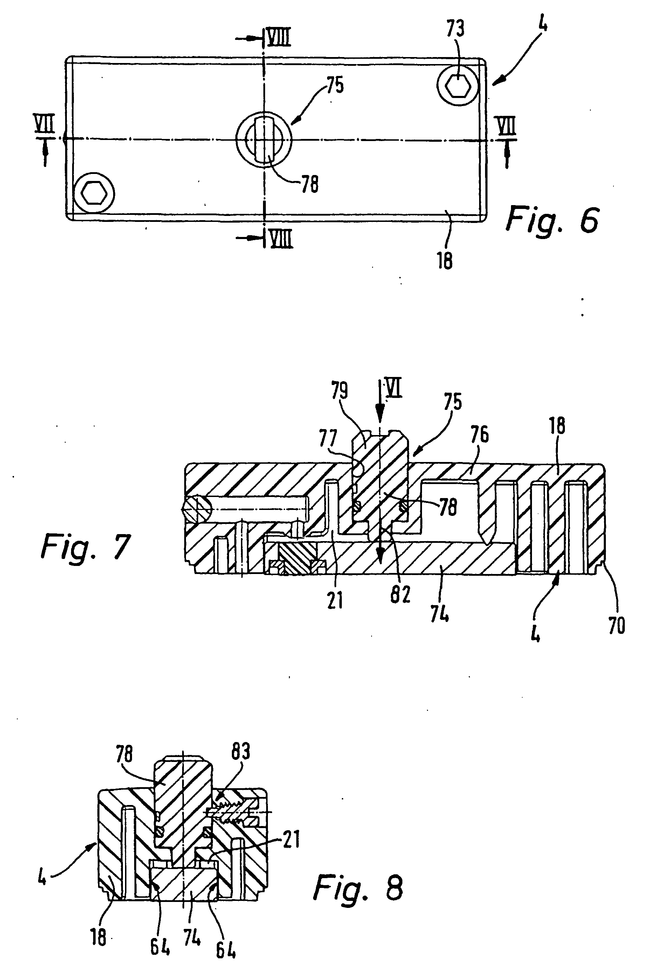

Sofern eine Arretierung der manuell betätigten Stellung gewünscht ist, bietet sich eine Ausgestaltung des Betätigungsstößels 78 als Dreh-Schiebeteil an, wie dies beim Ausführungsbeispiel der Fig. 6 bis 8 der Fall ist. Zur Aktivierung wird hier der Betätigungsstößel 78 am Betätigungsabschnitt 79 verdreht, wobei aus der Drehbewegung die gewünschte Axialbewegung abgeleitet wird. Letzteres geschieht beispielsweise durch eine am Außenumfang des Betätigungsstößels 78 ausgebildete wendelförmige Nut, in die ein gehäusefester Vorsprung eingreift, wie dies bei 83 angedeutet ist.

## Patentansprüche

1. Klappankerventil, mit einem Antriebsteil (2), das ein Antriebsteil-Gehäuse (7) aufweist, in dem eine Elektromagneteinheit (8) mit Eisenkern (11) und Spule (17) angeordnet ist, mit einem an dem Antriebsteil (2) befestigten Steuerteil (4), das ein Steuerteil-Gehäuse (18) aufweist, in dem eine durch das angesetzte Antriebsteil (2) abgedeckte Steuerkammer (21) ausgebildet ist, in der sich ein schwenkbeweglich gelagerter Klappanker (47) befindet, der abwechselnd eine am Antriebsteil (2) ausgebildete und von einem ersten Ventilsitz (24) umschlossene erste Ventilöffnung (22) und eine am Steuerteil-Gehäuse (18) ausgebildete und von einem zweiten ventilsitz (25) umschlossene zweite Ventilöffnung (23) freigeben oder verschließen kann, und mit einer die erste Ventilöffnung (22) umgebenden Aufnahmevertiefung (62) im Antriebsteil (2), die eine den Klappanker (47) in eine die zweite Ventilöffnung (23) verschließende Grundstellung vorspannende Rückstellfeder (63) enthält, **dadurch gekennzeichnet, dass** die Elektromagneteinheit (8) komplett im Antriebsteil-Gehäuse (7) aufgenommen ist, wobei das Antriebsteil-Gehäuse (7) als durch Spritzgießen an die Elektromagneteinheit (8) angeformtes Kunststoffteil ausgeführt ist, dass die Aufnahmevertiefung (62) und der erste Ventilsitz (24) beim Spritzgießen des Antriebsteil-Gehäuses (7) erzeugte unmittelbare Bestandteile des Antriebsteil-Gehäuses (7) sind, dass das ebenfalls als Kunststoffteil ausgeführte Steuerteil-Gehäuse (18) zusammen mit dem Antriebsteil (2) die Steuerkammer (21) definiert und im Bereich der Steuerkammer (21) so geformt ist, dass es eine Lagesicherung des Klappankers (47) in dessen Längsrichtung und Querrichtung bewirkt, und dass die beiden Gehäuse (7, 18) direkt aneinander anliegen und im Fügebereich (38) durch eine umlaufende Laserschweißverbindung (69) stoffschlüssig und gasdicht aneinander befestigt sind.

2. Klappankerventil nach Anspruch 1, **dadurch gekennzeichnet, dass** die Elektromagneteinheit (8) an der dem Klappanker (47) zugewandten Seite von einer filmartig dünnen Kunststoffschicht (53) des Antriebsteil-Gehäuses (7) überdeckt und somit dicht gekapselt im Antriebsteil-Gehäuse (7) untergebracht ist.

3. Klappankerventil nach Anspruch 1 oder 2, **dadurch gekennzeichnet, dass** der Eisenkern (11) E-förmig gestaltet ist und über drei jeweils einenends dem Klappanker (47) zugewandte Schenkel (14) verfügt, wobei die Spule (17) auf dem mittleren Schenkel (14) sitzt.

4. Klappankerventil nach Anspruch 3, **dadurch gekennzeichnet, dass** der Eisenkern (11) aus einem Paket seitlich aneinandergesetzter Polbleche (50) besteht.

5. Klappankerventil nach einem der Ansprüche 1 bis 4, **dadurch gekennzeichnet, dass** zur Schwenklagerung des Klappankers (47) ein am Steuerteil-Gehäuse (18) angeformter und von der dem Antriebsteil (2) entgegengesetzten Seite her in die Steuerkammer (21) hineinragender Lagerungsvorsprung (54) mit einem schneidenartigen Endabschnitt (55) in eine Querrille (56) des sich auf der entgegengesetzten Seite am Antriebsteil (2) abstützenden Klappankers (47) eingreift.

6. Klappankerventil nach einem der Ansprüche 1 bis 5, **dadurch gekennzeichnet, dass** der Klappanker (47) ein zwischen den beiden Ventilsitzen (24, 25) angeordnetes Verschlussglied (51) aufweist.

7. Klappankerventil nach Anspruch 6, **dadurch gekennzeichnet, dass** das Verschlussglied (51) in eine Durchbrechung (57) des länglichen, ferromagnetischen Grundkörpers (48) des Klappankers (47) lose eingesteckt ist.

8. Klappankerventil nach Anspruch 7, **dadurch gekennzeichnet, dass** das Verschlussglied (51) von der dem Antriebsteil (2) zugewandten Seite her in die Durchbrechung (57) des Grundkörpers (48) eingesteckt ist, wobei ein am Verschlussglied (51) vorgesehener radialer Vorsprung (58) die Einstecktiefe begrenzt und wobei die Rückstellfeder (63) drückend an dem Verschlussglied (51) angreift.

9. Klappankerventil nach Anspruch 7 oder 8, **dadurch gekennzeichnet, dass** das Verschlussglied (51) allseitig begrenzt kippbar in der Durchbrechung (57) sitzt, sodass sich seine den Ventilsitzen (24, 25) zugewandten Schließflächen (59, 60) bei entsprechendem Kontakt selbsttätig bezüglich des jeweils zugeordneten Ventilsitzes (24, 25) ausrichten können.

10. Klappankerventil nach einem der Ansprüche 1 bis 9, **gekennzeichnet durch** einen von der ersten Ventilöffnung (22) ausgehenden ersten Ventilkanal (27), einen von der zweiten Ventilöffnung (23) ausgehenden zweiten Ventilkanal (28) und einen über eine am Antriebsteil-Gehäuse (7) vorgesehene dritte Ventilöffnung (26) ebenfalls in die Steuerkammer (21) einmündenden dritten Ventilkanal (29), wobei alle drei Ventilkanäle (27, 28, 29) das Antriebsteil-Gehäuse (7) durchsetzen und mit einer ersten, zweiten und dritten Anschlussöffnung (31, 32, 33) zur Außenfläche des Antriebsteil-Gehäuses (7) ausmünden, wobei die im Antriebsteil-Gehäuse (7) verlaufenden Kanalbereiche unmittelbar bei dem zur Herstellung des Antriebsteil-Gehäuses (7) erfolgenden Umspritzen der Elektromagneteinheit (8) erzeugt wurden.

11. Klappankerventil nach Anspruch 10, **dadurch gekennzeichnet, dass** der erste Ventilkanal (27) einen im Steuerteil-Gehäuse (18) verlaufenden ersten Kanalabschnitt (35) und einen im Anschlussteil-Gehäuse (7) verlaufenden zweiten Kanalabschnitt (36) aufweist.

12. Klappankerventil nach Anspruch 11, **gekennzeichnet durch** eine zwischen dem Antriebsteil-Gehäuse (7) und dem Steuerteil-Gehäuse (18) platzierte, zum einen die Steuerkammer (21) und zum anderen den Übergangsbereich zwischen den beiden Kanalabschnitten (35, 36) umschließende Dichtung (68).

13. Klappankerventil nach einem der Ansprüche 10 bis 12, **dadurch gekennzeichnet, dass** die ersten, zweiten und dritten Anschlussöffnungen (31, 32, 33) an der dem Steuerteil (4) entgegengesetzten Grundfläche (34) des Antriebsteil-Gehäuses (7) vorgesehen sind.

14. Klappankerventil nach Anspruch 13, **gekennzeichnet durch** eine an die Grundfläche (34) des Antriebsteil-Gehäuses (7) angesetzte Anschlussplatte (6) mit mit den Ventilkanälen (27, 28, 29) kommunizierenden Anschlussplattenkanälen (42, 43, 44).

15. Klappankerventil nach einem der Ansprüche 1 bis 14, **dadurch gekennzeichnet, dass** der Klappanker (47) axial zwischen einer vorderen Stirnwand (65) der Steuerkammer (21) und einer mit Abstand zur rückwärtigen Stirnwand (66) in die Steuerkammer (21) hineinragenden Zwischenwand (67) des Steuerteil-Gehäuses (18) lagegesichert ist.

16. Klappankerventil nach einem der Ansprüche 1 bis 15, **dadurch gekennzeichnet, dass** das Steuerteil-Gehäuse (18) in dem die Steuerkammer (21) auf der dem Antriebsteil (2) entgegengesetzten Seite begrenzenden Wandabschnitt (76) eine Durchbrechung (77) aufweist, die unter Abdichtung von einem in Hubrichtung des Klappankers (47) verstellbaren Betätigungsstößel (78) durchsetzt ist, durch dessen manuelle Betätigung der Klappanker (47) ohne Aktivierung der Elektromagneteinheit (8) aus der Grundstellung auslenkbar ist.

17. Klappankerventil nach Anspruch 16, **dadurch gekennzeichnet, dass** der Betätigungsstößel (78) als allein durch axiales Verschieben betätigbares Schiebeteil oder als durch eine Drehbewegung betätigbares Dreh-Schiebeteil ausgebildet ist.

## Claims

1. Hinged armature valve with a drive part (2) comprising a drive part housing (7) in which a solenoid unit (8) with iron core (11) and coil (17) is located, with a control part (4) mounted on the drive part (2) and comprising a control part housing (18) in which a control chamber (21) covered by the mounted drive part (2) is provided to house a pivotably mounted hinged armature (47) capable of alternatively releasing or closing a first valve port (22) located on the drive part (2) and enclosed by a first valve seat (24) and a second valve port (23) located on the control part housing (18) and enclosed by a second valve seat (25), and with a location recess (62) surrounding the first valve port (22) in the drive part (2), which contains a return spring (63) preloading the hinged armature (47) towards a normal position in which the second valve port (23) is closed, **characterised in that** the solenoid unit (8) is completely contained in the drive part housing (7), whereby the drive part housing (7) is designed as a plastic part injection moulded onto the solenoid unit (8), **in that** the location recess (62) and the first valve seat (24) are direct component parts of the drive part housing (7) produced during the injection moulding of the drive part housing (7), **in that** the control part housing (18), which is also designed as a plastic part, defines the control chamber (21) together with the drive part (2) and is so shaped in the area of the control chamber (21) that it locates the hinged armature (47) in its longitudinal and transverse directions, and **in that** the two housings (7, 18) are in direct contact with one another and attached to one another in the joint area (38) by a continuous laser weld (69) to form an adhesive and gas-tight connection.

2. Hinged armature valve according to claim 1, **characterised in that** the solenoid unit (8) is covered by a filmy thin plastic layer (53) of the drive part housing (7) on the side facing the hinged armature (47) and is therefore fully and tightly enclosed in the drive part housing (7).

3. Hinged armature valve according to claim 1 or 2, **characterised in that** the iron core (11) is E-shaped, having three legs (14) with one end of each facing the hinged armature (47), whereby the coil (17) is mounted on the central leg (14).

4. Hinged armature valve according to claim 3, **characterised in that** the iron core (11) consists of a pair of polar strips (50) joined at the sides.

5. Hinged armature valve according to any of claims 1 to 4, **characterised in that**, for the pivotable mounting of the hinged armature (47), a mounting projection (54) integral with the control part housing (18) and projecting into the control chamber (21) from the side opposite the drive part (2) engages a transverse groove (56) of the hinged armature (47) supported on the opposite side of the drive part (2) with a knife-edge-like end section (55).

6. Hinged armature valve according to any of claims 1 to 5, **characterised in that** the hinged armature (47) incorporates a closing element (51) located between the two valve seats (24, 25).

7. Hinged armature valve according to claim 6, **characterised in that** the closing element (51) is loosely inserted into an opening (57) of the oblong ferromagnetic base body (48) of the hinged armature (47).

8. Hinged armature valve according to claim 7, **characterised in that** the closing element (51) is inserted into the opening (57) of the base body (48) from the side facing the drive part (2), whereby a radial projection (58) provided on the closing element (51) limits the depth of insertion and whereby the return spring (63) exerts pressure on the closing element (51).

9. Hinged armature valve according to claim 7 or 8, **characterised in that** the closing element (51) is capable of limited universal tilting in the opening (57), so that its closing surfaces (59, 60) facing the valve seats (24, 25) can align themselves automatically relative to the associated valve seat (24, 25) if corresponding contact is provided.

10. Hinged armature valve according to any of claims 1 to 9, **characterised by** a first valve passage (27) starting at the first valve port (22), a second valve passage (28) starting at the second valve port (23) and a third valve passage (29) likewise terminating in the control chamber (21) via a third valve port (26) provided on the drive part housing (7), whereby all three valve passages (27, 28, 29) run through the drive part housing (7), terminating at the outer surface of the drive part housing (7) with a first, second and third connecting port (31, 32, 33), whereby the passage sections running within the drive part housing (7) are directly produced during the encapsulation of the solenoid unit (8) in the course of the production of the drive part housing (7).

11. Hinged armature valve according to claim 10, **characterised in that** the first valve passage (27) consists of a first passage section (35) running within the control part housing (18) and a second passage section (36) running within the connecting part housing (7).

12. Hinged armature valve according to claim 11, **characterised by** a seal (68) placed between the drive part housing (7) and the control part housing (18) and enclosing the control chamber (21) on the one hand and the transitional area between the two passage sections (35, 36) on the other hand.

13. Hinged armature valve according to any of claims 10 to 12, **characterised in that** the first, second and third connecting ports (31, 32, 33) are provided on the base surface (34) of the drive part housing (7) opposite the control part (4).

14. Hinged armature valve according to claim 13, **characterised by** manifold (6) mounted on the base surface (34) of the drive part housing (7) and provided with manifold passages (42, 43, 44) communicating with the valve passages (27, 28, 29).

15. Hinged armature valve according to any of claims 1 to 14, **characterised in that** the hinged armature (47) is axially located between a front end wall (65) of the control chamber (21) and an intermediate wall (67) of the control part housing (18) projecting into the control chamber (21) at a distance from the rear end wall (66).

16. Hinged armature valve according to any of claims 1 to 15, **characterised in that** the control part housing (18) has an opening (77) in the wall section (76) bounding the control chamber (21) on the side opposite the drive part (2), through which passes, while forming a seal, an operating plunger (78) adjustable in the stroke direction of the hinged armature (47), by means of which the hinged armature (47) can be manually deflected from its normal position without activating the solenoid unit (8).

17. Hinged armature valve according to claim 16, **characterised in that** the operating plunger (78) is designed as a slide part operated by axial displacement only or as a rotary slide part operated by a rotary movement.

## Revendications

1. Soupape à armature battante avec une partie d'entraînement (2) qui comporte un boîtier de partie d'entraînement (7), dans lequel est disposée une unité à électroaimant (8) avec noyau en fer (11) et bobine (17), avec une partie de commande (4), fixée à la partie d'entraînement (2), qui comporte un boîtier de partie de commande (18) dans lequel est formée une chambre de commande (21) recouverte par la partie d'entraînement (2) mise en place, dans laquelle se trouve une armature battante (47) montée mobile en pivotement, qui peut dégager ou fermer alternativement une première ouverture de soupape (22) réalisée sur la partie d'entraînement (2) et entourée par un premier siège de soupape (24), et une deuxième ouverture de soupape (23) réalisée sur la boîtier de partie de commande (18) et entourée par un deuxième siège de soupape (25), et avec un renfoncement de réception (62), entourant la première ouverture de soupape (22), ménagé dans la partie d'entraînement (2), lequel contient un ressort de rappel (63) qui précontraint l'armature battante (47) dans une position de base fermant la deuxième ouverture de soupape (23), **caractérisée en ce que** l'unité à électroaimant (8) est entièrement reçue dans le boîtier de partie d'entraînement (7), le boîtier de partie d'entraînement (7) étant réalisé comme une pièce en matière synthétique formée par surmoulage par injection sur l'unité à électroaimant (8), **en ce que** le renfoncement de réception (62) et le premier siège de soupape (24) sont des parties constitutives directes du boîtier de partie d'entraînement (7), réalisées lors du moulage par injection du boîtier de partie d'entraînement (7), **en ce que** le boîtier de partie de commande (18), réalisé également sous la forme d'une pièce en matière synthétique, définit, avec la partie d'entraînement (2), la chambre de commande (21) et est formé, dans la zone de la chambre de commande (21), de manière à provoquer un maintien en position de l'armature battante (47) dans sa direction longitudinale et direction transversale, et **en ce que** les deux boîtiers (7, 18) s'appliquent directement l'un contre l'autre et sont fixés l'un à l'autre, par adhérence de matière et de manière étanche aux gaz, dans la zone de jointure (38), par une liaison périphérique (69), réalisée par soudage au laser.

2. Soupape à armature battante selon la revendication 1, **caractérisée en ce que** l'unité à électroaimant (8) est recouverte, sur le côté tourné vers l'armature battante (47), par une couche mince (53) de matière synthétique de type pellicule, du boîtier de partie d'entraînement (7), et est ainsi logée de manière hermétiquement encapsulée dans le boîtier de partie d'entraînement (7).

3. Soupape à armature battante selon la revendication 1 ou 2, **caractérisée en ce que** le noyau en fer (11) est en forme de E et possède trois branches (14) tournées chacune à une extrémité vers l'armature battante (47), la bobine (17) étant placée sur la branche centrale (14).

4. Soupape à armature battante selon la revendication 3, **caractérisée en ce que** le noyau en fer (11) est constitué d'un paquet de tôles polaires (50) juxtaposées latéralement.

5. Soupape à armature battante selon l'une des revendications 1 à 4, **caractérisée en ce que** pour le montage pivotant de l'armature battante (47), une saillie de support (54), formée sur le boîtier de partie de commande (18), pénétrant à l'intérieur de la chambre de commande (21) depuis le côté opposé à la partie d'entraînement (2), s'engage par un tronçon terminal (55) de type lame dans une rainure transversale (56) de l'armature battante (47) prenant appui, sur le côté opposé, sur la partie d'entraînement (2).

6. Soupape à armature battante selon l'une des revendications 1 à 5, **caractérisée en ce que** l'armature battante (47) comporte un organe d'obturation (51) disposé entre les deux sièges de soupape (24, 25).

7. Soupape à armature battante selon la revendication 6, **caractérisée en ce que** l'organe d'obturation (51) est enfiché librement dans un ajour (57) du corps de base (48) ferromagnétique, allongé, de l'armature battante (47).

8. Soupape à armature battante selon la revendication 7, **caractérisée en ce que** l'organe d'obturation (51) est enfiché, depuis le côté tourné vers la partie d'entraînement (2), dans l'ajour (57) du corps de base (48), une saillie radiale (58), prévue sur l'organe d'obturation (51), limitant la profondeur d'enfichage et le ressort de rappel (63) agissant par pression sur l'organe d'obturation (51).

9. Soupape à armature battante selon la revendication 7 ou 8, **caractérisée en ce que** l'organe d'obturation (51) est monté dans l'ajour (57) de manière à pouvoir basculer dans une mesure limitée de tous côtés, de sorte que ses surfaces d'obturation (59, 60), tournées vers les sièges de soupape (24, 25), peuvent s'orienter automatiquement, en cas de contact correspondant, par rapport au siège de soupape (24, 25) associé.

10. Soupape à armature battante selon l'une des revendications 1 à 9, **caractérisée par** un premier canal de soupape (27), partant de la première ouverture de soupape (22), par un deuxième canal de soupape (28) partant de la deuxième ouverture de soupape (23) et par un troisième canal de soupape (29) débouchant également dans la chambre de commande (21), par une troisième ouverture de soupape (26) prévue sur le boîtier de partie d'entraînement (7), les trois canaux de soupape (27, 28, 29) traversant tous le boîtier de partie d'entraînement (7) et débouchant, par une première, une deuxième et une troisième ouvertures de raccordement (31, 32, 33) à la surface extérieure du boîtier de partie d'entraînement (7), les zones des canaux, s'étendant dans le boîtier de partie d'entraînement (7), ayant été réalisées directement lors du surmoulage par injection de l'unité à électroaimant (8), effectué pour la fabrication du boîtier de partie d'entraînement (7).

11. Soupape à armature battante selon la revendication 10, **caractérisée en ce que** le premier canal de soupape (27) comporte un premier tronçon de canal (35), s'étendant dans le boîtier de partie de commande (18), et un deuxième tronçon de canal (36) s'étendant dans le boîtier de partie de raccordement (7).

12. Soupape à armature battante selon la revendication 11, **caractérisée par** une garniture d'étanchéité (68) placée entre le boîtier de partie d'entraînement (7) et le boîtier de partie de commande (18), entourant d'une part la chambre de commande (21) et, d'autre part, la zone de transition entre les deux tronçons de canal (35, 36).

13. Soupape à armature battante selon l'une des revendications 10 à 12, **caractérisée en ce que** les première, deuxième et troisième ouvertures de raccordement (31, 32, 33) sont prévues sur la surface de base (34) opposée à la partie de commande (4) du boîtier de partie d'entraînement (7).

14. Soupape à armature battante selon la revendication 13, **caractérisée par** une plaque de raccordement (6), placée sur la surface de base (34) du boîtier de partie d'entraînement (7), avec des canaux de plaque de raccordement (42, 43, 44) communiquant avec les canaux de soupape (27, 28, 29).

15. Soupape à armature battante selon l'une des revendications 1 à 14, **caractérisée en ce que** l'armature battante (47) est bloquée en position axiale entre une paroi frontale avant (65) de la chambre de commande (21) et une cloison intermédiaire (67) du boîtier de partie de commande (18), laquelle pénètre à l'intérieur de la chambre de commande (21), à distance de la paroi frontale arrière (66).

16. Soupape à armature battante selon l'une des revendications 1 à 15, **caractérisée en ce que** le boîtier de partie de commande (18) présente, dans le tronçon de paroi (76) délimitant la chambre de commande (21) sur le côté opposé à la partie d'entraînement (2), un ajour (77) qui est traversé, avec étanchéité, par un poussoir d'actionnement (78) déplaçable dans la direction de la course de l'armature battante (47), poussoir dont l'actionnement manuel fait que l'armature battante (47) peut être déviée de sa position de base, sans activation de l'unité à électroaimant (8).

17. Soupape à armature battante selon la revendication 16, **caractérisée en ce que** le poussoir d'actionnement (78) est réalisé comme une pièce coulissante, pouvant être actionnée uniquement par coulissement axial, ou comme une pièce coulissante et tournante pouvant être actionnée par un mouvement de rotation.
